# EUROPEAN PATENT SPECIFICATION

(11) **EP 1 382 516 B1**
(45) Date of publication and mention of the grant of the patent: **26.03.2008**
(21) Application number: 03254370.4
(22) Date of filing: 10.07.2003
(51) Int. Cl.: B62D 25/20, B60K 17/00, F16H 57/02, F16H 3/087

(54) **A power transmitting device and the vehicle thereof in particular for passenger protection during collisions**
Leistungsgetriebe und dazugehöriges Fahrzeug, insbesondere für den Insassenschutz bei einer Kollision
Dispositif de transmission de puissance et vehicule correspondante en particulier pour la protection de passagers pendant une collision

(30) Priority: 10.07.2002 JP 2002201758
(43) Date of publication of application: 21.01.2004
(73) Proprietor: Fuji Jukogyo Kabushiki Kaisha, Tokyo 160-8316 (JP)
(72) Inventor: Arai, Yoshimitsu, Fuji Jukogyo K. K., Tokyo 160-8316 (JP); Hayashi, Katsumi, Fuji Jukogyo K. K., Tokyo 160-8316 (JP)
(74) Representative: W.P. Thompson & Co.

(56) References cited:
- US-A- 3 455 409
- US-A- 3 929 203
- US-A- 4 703 827
- US-A- 5 036 943
- US-A- 5 184 524
- US-A- 5 193 415
- US-A- 5 557 980

## Description

### BACKGROUND OF THE INVENTION

### Field of the Invention

The present invention relates to a power transmitting device for a vehicle, and particularly to a floor tunnel of the vehicle for including the power transmitting device.

### Description of Related Art

Generally, in a four-wheel drive vehicle or in a rear-wheel drive vehicle, a power transmitting device is provided on the front and the inside of a floor tunnel portion formed on the floor panel of the vehicle.

The power transmitting device comprises an input shaft to which power generated by an engine provided in the front part of the vehicle is transmitted, and an output shaft for transmitting the power from the input shaft to the rear part of the vehicle. The power is transmitted to the output shaft by changing the speed of the rotation of the input shaft. The power transmitting device comprises a casing for containing the input shaft, the output shaft and the shift change mechanism. The upper part of the casing is formed so as to be approximately horizontal from the front to the rear. The floor tunnel portion of the floor panel of the vehicle is also formed so as to be approximately horizontal with respect to the upper part of the casing.

Because the upper part of the casing and the floor tunnel portion of the floor panel which are positioned so as to face each other, are formed substantially horizontally in the vehicle, the power transmitting device is moved rearwardly without any resistant force from the floor panel in a head-on collision of the vehicle. In other words, this structural arrangement is disadvantageous for the protection of a passenger because a toe board is deformed toward a passenger compartment by the interference with the power transmitting device, the engine and an auxiliary equipment when the engine and the auxiliary equipment move rearwardly along the power transmitting device. Therefore, in the vehicle having the power transmitting device, it is necessary that the toe board has a relatively high strength in order to protect a passenger in the head-on collision of the vehicle. As a result, the weight of the vehicle is increased. Further, the vehicle is disadvantaged for its production cost. Document US-A- 3929203 discloses a vehicle according to the preamble of claim 1.

### SUMMARY OF THE INVENTION

An object of the present invention is to provide a power transmitting device for a vehicle, which prevents a deformation of a toe board in a head-on collision of the vehicle and which is advantageous for a protection of a passenger, and a vehicle equipped with the power transmitting device.

In accordance with the present invention, a vehicle comprises:
a floor panel;
a floor tunnel portion which is formed so as to project a part of the floor panel and which extends in a front and rear direction; and
the power transmitting device provided on an inside of a front part of the floor tunnel portion;
   wherein the front part of the floor tunnel portion is formed so as to be inclined rearwardly and correspondingly to a slope of an upper part of the power transmitting device; and
an auxiliary equipment of a power unit is provided between the power unit and the front portion of the floor tunnel portion, the auxiliary equipment being located lower than a front end of the floor tunnel portion in a perpendicular direction.

According to the present invention, because the front part of the floor tunnel portion of the floor panel is also formed so as to be inclined downwardly and rearwardly in the same way as the upper part of the casing, the power transmitting device is also guided by the floor tunnel portion rearwardly and downwardly. The power transmitting device is more smoothly moved rearwardly and downwardly.

Therefore, because the power transmitting device is more smoothly moved rearwardly and downwardly in the head-on collision of the vehicle, it is possible to protect the compart of the vehicle more suitably. Thereby it is possible to improve the protection of the passenger in the vehicle.

According to the present invention, it is possible to improve the protection of the passenger of a four-wheel drive vehicle and/or a rear-wheel-drive vehicle in which the transmission is disposed on the inside of the front part of the floor tunnel portion.

Therefore, it is possible to suitably protect the passenger even through an old transmission of the prior art is used in the vehicle. It is highly advantageous in a practical use.

In addition, in accordance with the present invention, in a head-on collision of the vehicle, the auxiliary equipment of the engine is also moved rearwardly and downwardly with the power transmitting device. In this case, because the auxiliary equipment is provided under the front end of the floor tunnel portion, the auxiliary equipment does not interfere with the toe board disposed above the floor tunnel portion.

Therefore, in the head-on collision of the vehicle, the auxiliary equipment does not interfere with the toe board. Thereby, the toe board can be prevented from entering the compartment. It is possible to improve the protection of the passengers of the vehicle.

Preferably, the auxiliary equipment includes a turbocharger provided behind the engine.

According to the vehicle, even though the turbocharger is disposed behind the engine (between the engine and the toe board) in the vehicle, the turbocharger, which requires relatively larger space than other auxiliary equipment of the engine, can be prevented from interfering with the toe board in the head-on collision.

Therefore, even in the vehicle in which the turbocharger is disposed behind the engine, it is possible to further reduce an intruding amount of the turbocharger to the compartment side of the toe board in the head-on collision of the vehicle.

Preferably, the auxiliary equipment includes a catalyst for cleaning a gas discharged from the engine.

According to the vehicle, the catalyst, which requires relatively the larger space than the other auxiliary equipment, can be prevented from interfering with the toe board in the head-on collision of the vehicle.

Therefore, it is possible to further reduce an amount of the entrance of the catalyst to the cabin side of the toe board in the head-on collision of the vehicle.

### BRIEF DESCRIPTION OF THE DRAWINGS

By way of example only, a specific embodiment of the present invention will now be described, with reference to the accompanying drawings, in which:-
FIG. 1 shows an embodiment of the present invention, and is a side view showing a front portion of a vehicle;
FIG. 2 is a sectional side view of a transmission; and
FIG. 3 is a plan view of the transmission.

### DETAILED DESCRIPTION OF THE PREFERRED EMBODIMENTS

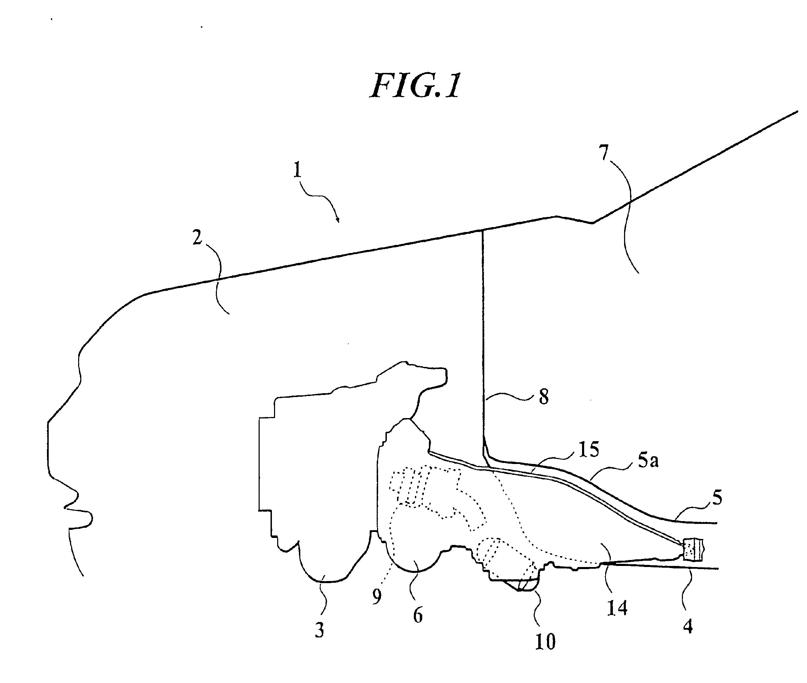

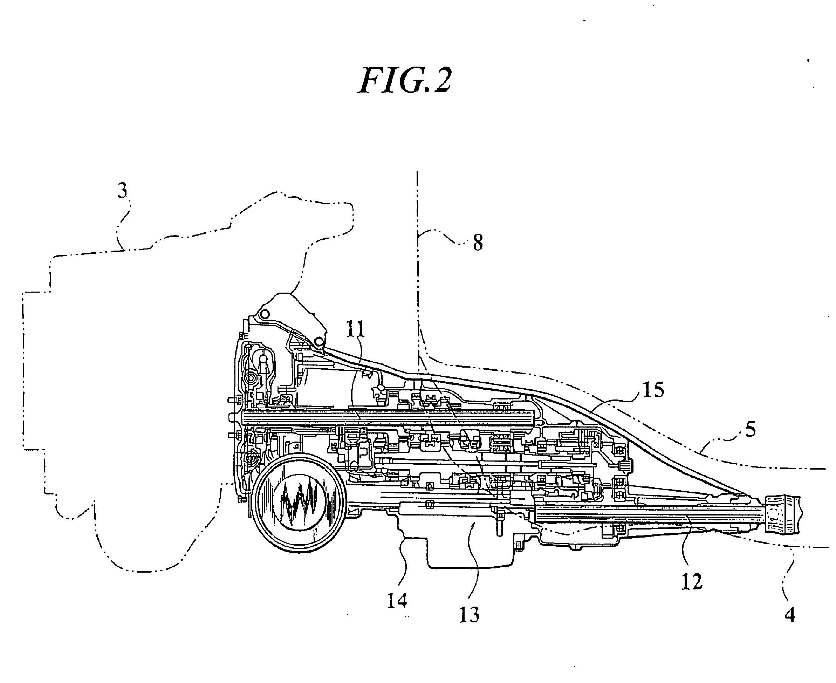

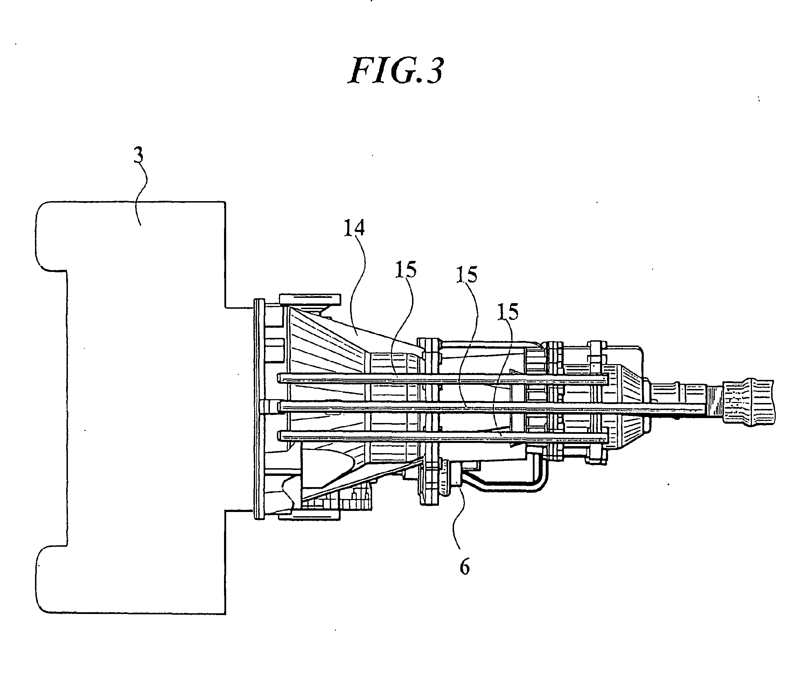

FIGS. 1 to 3 show an embodiment according to the present invention. FIG. 1 is a side view showing a front portion of a vehicle. FIG. 2 is a sectional side view of a transmission. FIG. 3 is a plan view of the transmission.

As shown in FIG. 1, in the vehicle 1, an engine 3 is longitudinally provided in an engine compartment 2 defined in the front portion of the vehicle so as to direct a crankshaft of the engine 3 in a longitudinal direction of the vehicle 1. The vehicle 1 is a four-wheel drive vehicle in which the power of the engine 3 is transmitted to the front and rear wheels. That is, a transmission 6 for transmitting the power of the engine 3 to the rear of the vehicle 1 by changing a speed, is provided in a floor tunnel portion 5 which is formed so as to project the floor panel 4 upwardly. The power outputted from the transmission 6 is distributed to the front and rear wheels through a transfer (not shown). A toe board 8 for separating the engine compartment 2 from a passenger compartment 7, extends upwardly and is connected with the front end of the floor panel 4.

In this embodiment, the engine 3 has a turbocharger 9. An exhaust pipe is connected with the engine 3. A catalyzer 10 is provided in the exhaust pipe as a catalyst.

The floor tunnel portion 5 is formed in an approximately reversed hat shape so as to extend in an approximately front and rear direction along the right and left middle portion of the floor panel 4. As shown in FIG. 1, the transmission 6 is disposed on the inside of the front portion of the floor tunnel portion 5 as a power transmitting device for the vehicle 1, which is connected with the engine 3. In this embodiment, because the engine 3 is mounted vertically, the engine 3 is disposed so as to be in line with the transmission 6 in an approximately longitudinal direction.

As shown in FIG. 2, the transmission 6 comprises an input shaft 11 to which the power generated by the engine 3 is transmitted, an output shaft 12 for transmitting the power of the input shaft 11 to the rear of the vehicle, a speed change mechanism 13 for transmitting the power to the output shaft 12 by changing the speed of the rotation of the input shaft 11 and a cylindrical casing 14 extending in an approximately front and rear direction, for containing the input shaft 11, the output shaft 12 and the mechanism 13.

As shown in FIG. 2, the input shaft 11 extends in the front and rear direction and is disposed in the upper front portion of the casing 14. The input shaft 11 is rotated by the crankshaft of the engine 3. The output shaft 12 extends in the front and rear direction, and is disposed in the lower rear portion of the casing 14. The mechanism 13 connects the rear end side of the input shaft 11 with the front end side of the output shaft 12 so as to transmit the power. That is, when the output shaft 12 is connected with the input shaft 11 by the mechanism 13, the output shaft 12 is rotated.

As shown in FIG. 2, the casing 14 is so formed that the upper part thereof is inclined downwardly and rearwardly from the front to the rear of the casing 14. In this embodiment, because the input shaft 11 is disposed in the upper front portion of the casing 14 and the output shaft 12 is disposed in the lower rear part of the casing 14, the input shaft 11 and the output shaft 12 are disposed along the upper portion of the casing 14, which is inclined downwardly and rearwardly.

On the upper portion of the casing 14, projecting portions 15 are formed so as to project upwardly and extend in an approximately longitudinal direction. In this embodiment, as shown in FIG. 3, three projecting portions 15 are so formed that one center projecting portion is disposed at the middle portion of the casing 14 in the lateral direction and a pair of projecting portions are disposed on the right and the left sides apart from the center projecting portion.

In addition, the front portion of the floor tunnel portion 5 of the floor panel 4 is formed so as to be inclined downwardly and rearwardly corresponding to the slope of the upper portion of the casing 14. That is, as shown in FIG. 1, the upper surface of the floor tunnel portion 5 is formed along the upper portion of the casing 14. The upper part of the casing 14 is disposed apart from the upper surface of the floor tunnel portion 5 at approximately the same interval in the longitudinal direction.

As shown in FIG. 1, the turbocharger 9 is disposed behind the engine 3, that is, between the engine 3 and the toe board 8. Further, the turbocharger 9 is disposed at the middle portion of the vehicle 1 in the lateral direction and is positioned at the approximately front of the floor tunnel portion 5 of the floor panel 4. In this case, the turbocharger 9 is disposed lower than the front end of the floor tunnel portion 5.

As shown in FIG. 1, the catalyzer 10 is disposed under the floor tunnel portion 5 of the floor panel 4. In this embodiment, the engine 3 has a plurality of cylinders. After exhaust gases discharged from each cylinder are gathered into one exhaust pipe, toxic gases are removed by the catalyzer 10.

In the vehicle 1 as described above, in the head-on collision, at first, the front bumper, the front end member of the vehicle is deformed. A force acts on the engine 3 rearwardly. In this case, the transmission 6 is moved rearwardly with the engine 3 because the transmission 6 is connected with the engine 3. When the transmission 6 is pushed rearwardly, the upper portion of the casing 14 contacts with the upper portion (upper surface) of the floor tunnel portion 5.

At this moment, because the upper portion of the casing 14 is formed so as to be inclined downwardly and rearwardly, a force acts on the transmission 6 downwardly from the floor tunnel portion 5 of the floor panel 4. As a result, the transmission 6 is moved rearwardly and downwardly. Further, the engine 3, the turbocharger 9 and the catalyzer 10 are moved rearwardly and downwardly with the transmission 6.

Because a plurality of projecting portions 15 projecting above the casing 14 are formed on the upper portion of the casing 14 of the transmission 6, when the casing 14 contacts with the floor panel 4, each projecting portion 15 slides on the floor tunnel portion 5. Therefore, the transmission 6 is smoothly moved rearwardly and downwardly.

In this instance, because the portion of the floor panel 4, which is disposed on floor tunnel portion 5 side, is also formed so as to be inclined downwardly and rearwardly like the upper portion of the casing 14, the transmission 6 is guided by the floor tunnel portion 5 rearwardly and downwardly. Therefore, the transmission 6 is smoothly moved rearwardly and downwardly.

That is, because in the head-on collision of the vehicle 1, the transmission 6 is moved rearwardly and downwardly with respect to the floor panel 4, the transmission 6 does not contact with the toe board 8. When the engine 3 moves rearwardly and downwardly by following the transmission 6 and contacts with the toe board 8, the collision energy of the engine 3 is transmitted to the toe board 8 rearwardly and downwardly. Therefore, the toe board 8 is prevented from intruding into the compartment 7 in the head-on collision.

In this case, because the turbocharger 9 is disposed below the front end of the floor tunnel portion 5, the turbocharger 9 moves under the floor panel 4 in the head-on collision without interfering with the toe board 8 positioned above the floor tunnel portion 5. Further, because the catalyzer 10 is disposed under the floor tunnel portion 5, the catalyzer 10 does not interfere with the toe board 8 in the head-on collision. That is, both the turbocharger 9 and the catalyzer 10 do not interfere with the toe board 8. As a result, the toe board 8 is not deformed by the auxiliary equipment of the engine 3.

As described above, according to the transmission 6 of this embodiment and the vehicle 1 comprising the transmission 6, because the upper part of the casing 14 is formed so as to be inclined downwardly and rearwardly, the transmission 6 is moved rearwardly and downwardly and the toe board 8 is not deformed by the transmission 6 in the head-on collision of the vehicle 1. As a result, it is possible to improve the protection of the passenger in the vehicle 1. Therefore, it is possible to suitably protect the passenger without making the floor panel 4 and the toe board 8 strong. As a result, it is possible to reduce the manufacturing cost of the vehicle 1 and to improve the maneuverability and the fuel efficiency by reducing the weight of the vehicle 1.

Further, according to the transmission 6 of this embodiment and the vehicle 1 comprising the transmission 6, because the engine 3 is also moved by following the transmission 6 rearwardly and downwardly, the toe board 8 is prevented from being deformed by the engine 3 in the head-on collision of the vehicle 1. As a result, it is possible to improve the protection of the passenger in the vehicle 1 by the above function.

Furthermore, because the toe board 8 is prevented from being deformed by the engine 3 in the head-on collision of the vehicle 1, it is possible to shorten the space between the engine 3 and the toe board 8. As a result, the engine 3 can be disposed closer to the toe board 8. Therefore, overhanging amount of the front portion of the vehicle 1 is shortened. By moving the engine 3 which is a heavy member, to the middle portion of the vehicle 1, it is possible to improve the maneuverability of the vehicle 1.

According to the transmission 6 of this embodiment and the vehicle 1 comprising the transmission 6, because the stability and the strength of the transmission 6 are improved by forming the projecting portions 15 on the upper portion of the casing 14, the vibration of the transmission 6 can be prevented. Further, the vibration and the noise of the vehicle can be reduced.

Furthermore, because the projecting portions 15 are formed on the upper portion of the casing 14, the transmission 6 smoothly moves rearwardly and downwardly by sliding the projecting portions 15 on the floor tunnel portion 5 in the head-on collision of the vehicle 1. Therefore, there is no possibility that the transmission 6 is caught in the floor tunnel portion 5 and that the floor panel 4 is excessively deformed. It is possible to suitably protect the compartment of the vehicle 1.

Moreover, according to the transmission 6 of this embodiment and the vehicle 1 with the transmission 6, not only because the input shaft 11 is disposed in the upper front portion of the casing 14 and but also because the output shaft 12 is disposed in the lower rear portion of the casing 14, unnecessary space is not prepared in the casing 14. This arrangement is highly advantageous in practical use.

According to the vehicle 1 of this embodiment, because the floor tunnel portion 5 of the floor panel 4 is formed so as to be inclined downwardly and rearwardly, the transmission 6 is smoothly guided by the floor tunnel portion 5 rearwardly and downwardly in the head-on collision of the vehicle 1. It is possible to protect the compartment of the vehicle 1 more. Thereby, it is possible to improve the protection of passengers in the vehicle 1.

According to the vehicle 1 of this embodiment, even though a turbocharger 9 is disposed behind the engine 3 in the vehicle 1, the turbocharger 9, which occupies a relatively larger space than the other auxiliary equipment of the engine 3, can be prevented from interfering with the toe board 8 in the head-on collision. Therefore, even in a vehicle 1 in which the turbocharger 9 is disposed behind the engine 3, it is possible to further reduce the intruding amount of the turbocharger 9 to the compartment side of the toe board 8 in the head-on collision of the vehicle 1.

Also, according to the vehicle 1 of this embodiment, because the catalyzer 10 is disposed under the floor tunnel portion 5, that is, below the front end of the floor tunnel portion 5, the catalyzer 10, which is relatively larger than the other auxiliary equipment of the engine 3, can be prevented from interfering with the toe board 8 in the head-on collision of the vehicle 1. Therefore, it is possible to further reduce the intruding amount of the catalyzer 10 to the compartment side of the toe board 8 in the head-on collision of the vehicle 1.

In the above embodiment, the power transmitting device provided on the inside of the front portion of the floor tunnel portion 5 is described as the transmission 6. However, even though, for example, a transfer is used as the power transmitting device, it is possible to obtain the same functions and effects as the above embodiment. Furthermore, the vehicle 1 may be a four-wheel drive vehicle or a rear-wheel-drive vehicle as long as the floor tunnel portion 5 is formed on the floor panel 4. Further, the engine 3 may be mounted either longitudinally or laterally.

In the above embodiment, the turbocharger 9 and the catalyzer 10 are disposed beside the transmission 6 and below the front end of the floor tunnel portion 5. However, for example, when another auxiliary equipment, such as a compressor, is provided near the transmission 6. this device may be also disposed below the front end of the floor tunnel portion 5.

In the above embodiment, three projecting portions 15 are formed on the casing 14. However, for example, only one projecting portion 15 need be provided. The number of projecting portions 15 is not limited to three. Even though the projecting portions 15 are not formed on the casing 14, the transmission 6 can be further moved rearwardly and downwardly because the upper part of the casing 14 is formed so as to be inclined downwardly and rearwardly

Also, in the above embodiment, the turbocharger 9 is provided as a supercharger. However, any type of supercharger may be applied. Instead of this supercharged engine, a normal aspiration engine may be used. Further, other specific structures, and the like, can be also modified.

As described above in detail, according to the present invention, the toe board is not deformed by the power transmitting device. It is possible to improve the protection of the passenger in the vehicle. Thereby, it is possible to suitably protect the passenger without making the floor panel and the toe board strong. As a result, it is possible to reduce the manufacturing cost of the vehicle and to improve the maneuverability and the fuel efficiency by reducing the weight of the vehicle.

Because the power unit is also moved by following the power transmitting device rearwardly and downwardly, the toe board is prevented from being deformed by the unit in the head-on collision of the vehicle. As a result, it is possible to improve the protection of the passenger in the vehicle by the above function.

Further, because the toe board is prevented from being deformed by the power unit in the head-on collision of the vehicle, it is possible to minimize the space between the unit and the toe board. As a result, the unit can be disposed closer to the toe board. Therefore, the overhanging amount of the front portion can be shortened. By moving the unit which is a heavy member, to the middle portion of the vehicle, it is possible to improve the maneuverability of the vehicle.

## Claims

1. A vehicle having a floor panel therein and comprising:
a floor tunnel portion formed to extend a portion of the floor panel in a longitudinal direction of said vehicle; and
a power transmitting device provided on an inside of said front portion of the floor tunnel portion;
wherein the front portion of the floor tunnel portion is formed so as to be inclined downwardly and rearwardly corresponding to an inclination of an upper portion of the power transmitting device; **characterized by**:
comprising an auxiliary equipment of a power unit being provided between the power unit and the front portion of the floor tunnel portion, and being located lower than a front end of the floor tunnel portion in a perpendicular direction.

2. The vehicle as claimed in claim 1, wherein the power transmitting device is a transmission.

3. The vehicle as claimed in claim 1 or claim 2, wherein the auxiliary device includes a turbocharger provided behind the power unit.

4. The vehicle as claimed in any of claims 1 to 3, wherein the auxiliary equipment includes a catalyst for purifying exhaust gases discharged from the power unit.

## Patentansprüche

1. Fahrzeug mit einem Bodenblech darin, welches das Folgende umfasst:
einen Bodentunnelteil, der ausgebildet ist, um einen Teil des Bodenblechs in einer Längsrichtung des Fahrzeugs zu erweitern; und
eine Kraftübertragungseinrichtung, die an einer Innenseite des vorderen Teils des Bodentunnelteils vorgesehen ist;
wobei der vordere Teil des Bodentunnelteils so ausgebildet ist, um nach unten und nach hinten entsprechend einer Neigung eines oberen Teils der Kraftübertragungseinrichtung geneigt zu sein; **dadurch gekennzeichnet, dass**
es eine Zusatzausrüstung einer Antriebseinheit aufweist, die zwischen der Antriebseinheit und dem vorderen Teil des Bodentunnelteils vorgesehen ist und niedriger als ein Vorderende des Bodentunnelteils in einer senkrechten Richtung angeordnet ist.

2. Fahrzeug nach Anspruch 1, bei dem die Kraftübertragungseinrichtung ein Getriebe ist.

3. Fahrzeug nach Anspruch 1 oder Anspruch 2, bei dem die Zusatzeinrichtung einen hinter der Antriebseinheit vorgesehenen Turbolader umfasst.

4. Fahrzeug nach einem der Ansprüche 1 bis 3, bei dem die Zusatzausrüstung einen Katalysator zum Reinigen von aus der Antriebseinheit abgegebenen Abgasen umfasst.

## Revendications

1. Véhicule ayant un panneau de plancher dans celui-ci et comportant :
une portion de tunnel de plancher formée pour étendre une portion du panneau de plancher dans une direction longitudinale dudit véhicule ; et
un dispositif de transmission de puissance mis en oeuvre sur un intérieur de ladite portion avant de la portion de tunnel de plancher ;
dans lequel la portion avant de la portion de tunnel de plancher est formée de telle manière à être inclinée vers le bas et vers l'arrière pour correspondre à une inclinaison d'une portion supérieure du dispositif de transmission de puissance ;
**caractérisé par :**
**le fait qu'**il comporte un équipement auxiliaire d'un bloc moteur étant mis en oeuvre entre le bloc moteur et la portion avant de la portion de tunnel de plancher, et étant situé de manière inférieure par rapport à une extrémité avant de la portion de tunnel de plancher dans une direction perpendiculaire.

2. Véhicule selon la revendication 1, dans lequel le dispositif de transmission de puissance est une transmission.

3. Véhicule selon la revendication 1 ou la revendication 2, dans lequel le dispositif auxiliaire comprend un turbocompresseur mis en oeuvre derrière le bloc moteur.

4. Véhicule selon l'une quelconque des revendications 1 à 3, dans lequel l'équipement auxiliaire comprend un pot catalytique destiné à purifier les gaz d'échappement déchargé en provenance du bloc moteur.
